# EUROPEAN PATENT APPLICATION

(11) **EP 3 188 345 A1**
(43) Date of publication of application: **05.07.2017**
(21) Application number: 16207603.8
(22) Date of filing: 30.12.2016
(51) Int. Cl.: H02K 1/14, H02K 3/52

(54) **ELECTRIC ENGINE STATOR, ELECTRIC ENGINE, AND ELECTRIC ENGINE STATOR COIL INSULATION PROCESS**

(30) Priority: 04.01.2016 BR 102016000057
(71) Applicant: Whirlpool S.A., 04578-000 São Paulo - SP (BR)
(72) Inventor: PACHECO, Anderson Ricardo, 89218-005 Joinville (BR); ESPÍNDOLA, Aleandro Amauri de, 89218-600 Joinville (BR); HILLE, Cláudio Roberto, 89217-170 Joinville (BR)
(74) Representative: Soldatini, Andrea

(57) **Abstract**

The present invention relates to a device for engine stator, an electric engine and a method isolation coil engine stator. Specifically, the present invention comprises an electric conductor wire coil, wherein a set of blade plates is inserted, a first insulating plate (11) and a second insulating plate (12) are arranged in a first region (11 a) And a second region (12a) of the coil, so that the insulating plates are intermediated by an insulating means formed of air (13), wherein, in the device, the plates do not make physical contact. The present invention relates to the field of engine manufacturing, electrical engineering and electric engines.

## Description

### Field of the Invention

The present invention describes a device for engine stator, an electric engine and insulation process for engine stator. This invention is situated in the field of manufacturing process of engines, electrical engineering and electric engines.

### Background of the Invention

Conventional coils manufacture processes for electric engine consists in sizing a reel to make the winding of an electric conductor wire. The spool is formed by a tube which connects two limiting elements, which may present themselves transverse in circular or square section, so that an electric conductor wire is wound axially to the tube axis, so that the stop members prevent the wire winding exceeds the length of the tube. Further, the conductor wire gauge is dimensioned to withstand the necessary load current which is subjected, as well as the number of turns that the same presents.

When installing a coil on stators of electric engines, you must ensure that the parts conducting electric current, as well as the conducting wires, do not make physical contact with the metal parts that make up the engine. The electric engine is formed by a structure that has several metallic parts to support the movements made by the same when in operation. In this way, when a conductive wire comes into physical contact with the structure of an engine, the electric current ends up being dissipated, causing in effective losses, besides making the metallic structure of the engine an electrical part alive, in a way that causes electric shocks Persons coming into contact with the engine, or leakage of electrical current to equipment that is nearby.

To this end, current solutions provide an electrical insulation means to cover the electric current conducting region of the stator coil where an insulation material is deposited below the stator coils and over the electric steel of the blades, so that Are secured to the limiting elements of the reel of the coil winding. In electric engine assembly processes, it is necessary for the insulation material to be arranged in two parts, wherein a first part is inserted on a first side, being secured in a first limiting element of the spool, and a second part of the insulation material is inserted by a second side, being secured to a second limiting member of the spool.

Thus, the parts are extended so as to abut, overlying the entire electrical conduction region of the coil. The contact between the parts of the insulation material can be carried out in several different ways, the first part overlapping the second part, or vice versa, the first part having a male-type connection and the second part having a female- and vice versa.

However, such a process of assembling electric engines with said two-part insulation material, coming into contact, presents problems during assembly, where in the act of connection between the parts a deformation occurs in the connecting parts, in addition of requiring the two materials to have different shapes, intended specifically for such a function, i.e., the same part that is engaged by one side, is impossible to be used on the other side of the reel, and vice versa.

In the search for the state of the art in scientific and patent literature, the following documents dealing with the subject have been found:
The document BR PI0706119-6 A2 describes a process and an electrical insulation arrangement of a coil for electric engines of refrigeration compressors, where the insulation elements are divided into two parts that are arranged on the surface of the coil, covering all the region that is conducting electric current, in addition to the parts being engaged one to another, so as to overlap or just meet. Such a solution, however, is that the parts are supported or overlapped, which at the moment of the assembly of the engine imply a deformation in the parts, besides the need to be of different forms, increasing the cost of manufacture of the engine besides the difficulty to realize the assembly process.

### Summary of the Invention

Accordingly, the present invention aims to solve the problems encountered in the state of the art from the development of an electric engine stator device showing the insulation elements, such as electrical insulating plates, being arranged in an opposing manner, where both have the same physical characteristics, such as geometry and material, which are separated by an insulation means formed by air (13).

In a first object, the present invention features an electric engine stator arrangement comprising:
a. a blade plate assembly (14);
b. Electric conductor wire coil (15);
c. A first insulation plate (11); and
d. A second insulation plate (12);
in which,
- the blade plate assembly (14) is inserted into the center of the electric conductor wire coil (15);
- the first insulation plate (11) is arranged in a first region (11.a);
- the second insulation plate (12) is arranged in a second region (12a); and
- the first electric insulating plate 11 and the second electric insulating plate 12 are intermediated by an air insulation means 13.

In a second object, the present invention features an electric engine comprising:
a. coil assembly (15) coupled to a fixed element, forming the stator;
b. Rotating element magnetically excited by the set of coils (15);
in which,
- the coil assembly 15 comprises a first electrical insulating plate 11 disposed in a first region 11a and a second electrical insulating plate 12 disposed in a second region 12a;
- the first electric insulating plate 11 and the second electric insulating plate 12 are intermediated by an air insulation means 13.

In a third object, the present invention features an electric engine stator coil insulation process comprising the steps of:
a. Inserting a first insulation plate (11) into a first region (11.a);
b. Inserting a second insulation plate (12) into a second region (12a);
in which,
- the first insulation plate (11) and the second insulation plate (12) are intermediated by an air insulation means (13); and
- the first insulation plate (11) has the same physical characteristics as the second insulation plate (12).

The inventive concept common to all claimed protection contexts relates to a means for isolating the coil, comprising conductive wires from a structure capable of conducting electric current, having a first insulation plate (11) and A second insulation plate (12), separated by an insulating means formed by air.

These and other objects of the invention will be readily appreciated by those skilled in the art and by companies having interests in the art and will be described in sufficient detail for their reproduction in the following description.

### Brief Description of the Figures

In order to better define and clarify the content of the present application, the following figures are presented:
Figure 1 shows a diagram of the assembly of the device shown in the present invention.

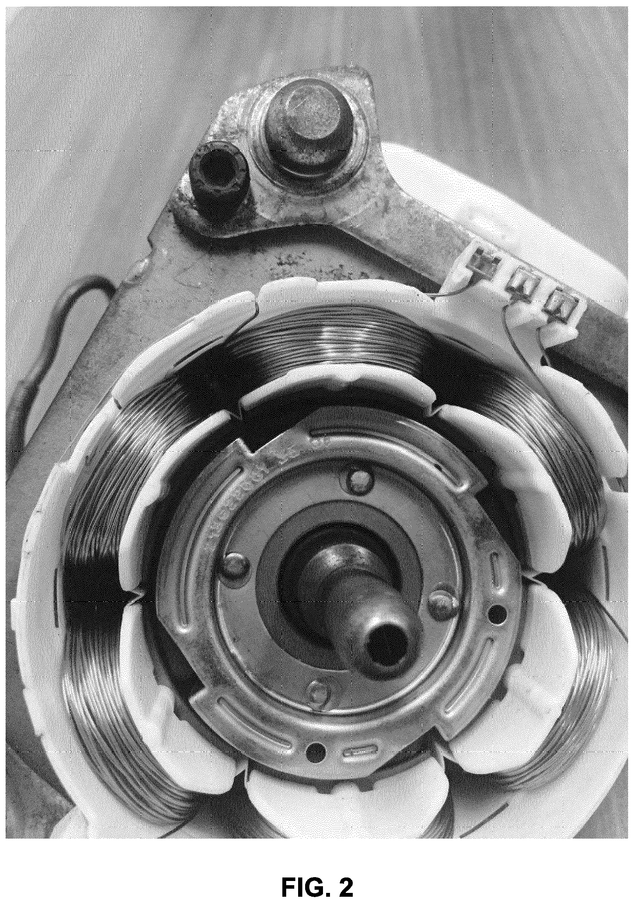

Figure 2 shows a front view of an electric engine showing one embodiment of the present invention.

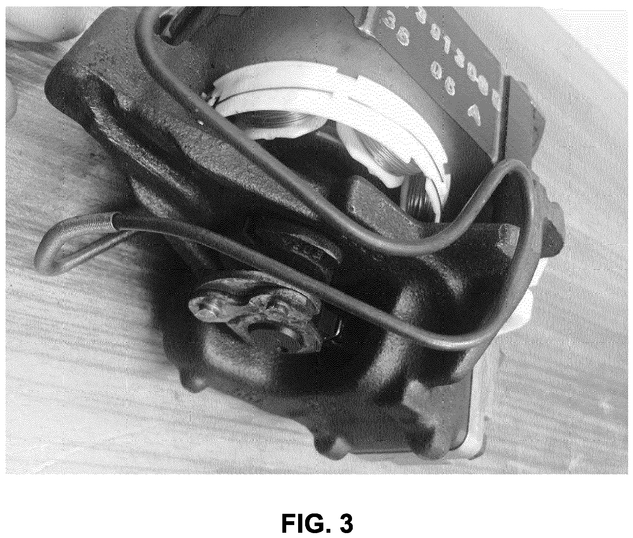

Figure 3 shows a rear view of an electric engine showing one embodiment of the present invention.

### Detailed Description of the Invention

The following descriptions are set forth by way of example and not limiting the scope of the invention and will make the object of the present patent application more clearly understood.

The present invention provides a device for use in stators of electric engines, where it is capable of conducting electric current and generating sufficient magnetic field for the operation of an engine. Such a device prevents the electric current flowing through its conductive elements through the metal structure of an electric engine, which causes in losses in the current, besides causing in electrical shocks in users that are in contact with a metallic part of the structure of an engine.

The device shown is composed of an electric conductor wire coil 15, a blade plate assembly 14 that functions as the core, where it is inserted into the center of the electric conductor wire coil 15.

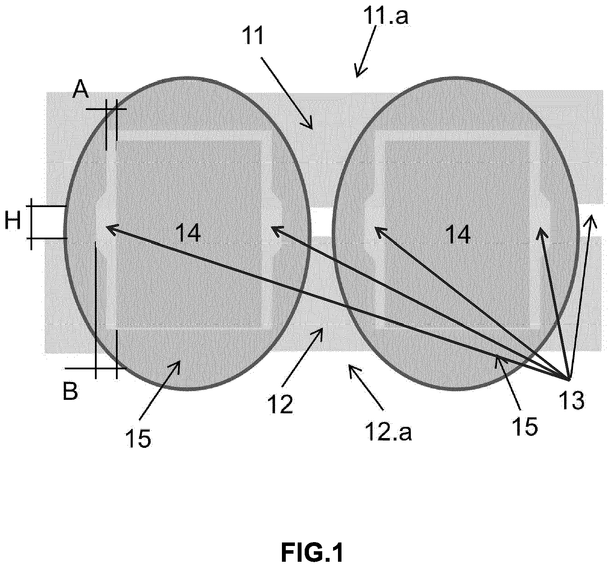

For the insulation of the coil 15, a first insulation plate 11 is disposed in a first region 11 a, as seen in Figure 1, and a second insulation plate 12 disposed in a second region (12a), whereby insulation board is meant any material capable of presenting a high resistance for the passage of electric current, making it difficult to pass through the material. In addition, the insulation plate has a means for securing the same to the set of blades (14), wherein, in one embodiment, the means for fixing is the fact that the stator plate (14), which generates interference and provides the fixing of the plate to the stator.

As can be seen in figure 1, the first insulation plate 11 and the second insulation plate 12 are intermediate by an insulation means formed by air 13, i.e. the insulation plates Are abutted, connected or overlapped one another to insulate the conductive region of electricity. In the proposed device, the plates have a high thickness (B) such that, even with the movements caused by the operation of the electric engine, the metal part of the engine structure does not contact the electrically conductive part of the coil assembly (15) due to the fact that the very thickness of the body of the insulation plates (11) and (12) prevents said contact.

In order to facilitate assembly of the device proposed in the present invention and to reduce the manufacturing cost thereof, both the first insulation board (11) and the second insulation board (12) have the same physical characteristics, both In relation to the material of which both are composed, as previously mentioned, when in the geometry thereof, wherein in one embodiment both plates have rectangular geometry without the need to comprise an element to connect one another, or present shapes Differentiated at the approximate ends.

Such facts provide advantages in assembling the device itself, for example, reducing the amount of material by varying the distance (H), based on the thickness of the insulation means formed by air (13), in addition to the Fact that there is a reduction in the complexity of reaching the minimum distance of Clearance (B), which is the smallest distance between two parts conducting electric energy.

In a further object of the invention, there is proposed an electric engine comprising a set of coils (15) coupled to a fixed element which, in this way, forms the engine stator, which is responsible for generating a magnetic field for engine operation. Further, the engine comprises a rotating member which is excited by the magnetic field generated by the stator coil assembly (15), wherein said rotating member is a conventional type rotor adopted in electric engines.

The stator coil assembly (15) of the electric engine comprises a first electrical insulating plate (11), arranged in a first region (11a), and a second electrical insulating plate (12) disposed in a second region (12a), whereby the electrical insulation of the engine stator coils (15) is performed in relation to the metal parts of the engine structure itself. The electrical insulating plates 11 and 12 are intermediated by an air insulation means 13, that is, the plates do not make physical contact with each other.

Furthermore, in the electric engine proposed in the present invention the insulating plates, as can be seen still in figure 1, are also arranged in the set of coils, that is, the first electric insulating plate (11) has a spacing thereof Size occupied by the second electrical insulating plate (12). In addition, as previously mentioned, the insulating plates 11 and 12 have the same physical characteristics as for the composition material with respect to the geometry thereof.

In another object of the present invention, there is shown a coil insulation process for electric engine stator, wherein the coil cited in the process is of the conventional type used in engines, transformers, etc., being defined as being a wire Electric conductor wrapped in a tubular element, which allows to operate with magnetic fields.

Thus, the method is defined by the step of inserting a first insulation board (11) into a first region (11.a); Insertion of a second insulation plate (12) into a second region (12a). In the assembly process, the first insulation plate 11 is inserted into the first region 11 a and secured by a securing means, and thus, the second insulation plate 12 is inserted into the second region 12. A) and also secured by a fastening means, but both are arranged so as to be intermediated by an air insulation means (13), i.e. both do not make physical contact. Further, the first insulation plate 11 has the same physical characteristics as the second insulation plate 12, for example, when the geometry and the material used in the manufacture thereof.

Those skilled in the art will appreciate the knowledge presented herein and may reproduce the invention in the embodiments presented and in other embodiments, falling within the scope of the appended claims.

## Claims

1. Device for electric engine stator is **characterized in that** it comprises:
a. a set of blade plates (14);
b. coil of electric conductor wire (15);
c. a first insulating plate (11); and
d. a second insulating plate (12);
in which,
- the blade plate assembly (14) is inserted into the center of the electric conductor wire coil (15);
- the first insulating plate (11) is arranged in a first region (11.a);
- the second insulating plate (12) is arranged in a second region (12a); and
- the first electric insulating plate (11) and the second electric insulating plate 12 are intermediated by an air insulation means (13).

2. Device for electric engine stator according to claim 1, **characterized in that** the first insulating plate (11) has the same geometry as the second insulating plate (12).

3. Device for electric engine stator according to any one of claims 1 and 2, **characterized in that** the first insulating plate (11) is composed of equal material to the second insulating plate (12).

4. Electric engine **characterized in that** it comprises:
a. coil set (15) coupled to a fixed element forming the stator;
b. rotating element magnetically excited by the set of coils (15);
in which,
- the coil assembly 15 comprises a first electrical insulating plate 11 disposed in a first region 11a and a second electrical insulating plate 12 disposed in a second region 12a;
- the first electric insulating plate 11 and the second electric insulating plate 12 are intermediated by an air insulation means 13.

5. Electric engine, according to claim 4, **characterized in that** the first insulating plate (11) and the second insulating plate (12) are also arranged in the set of coils (15).

6. Electric engine, according to claims 4, **characterized in that** the first insulating plate (11) has the same physical features of the second insulating plate (12).

7. Process for coil insulation for electric engine stator, **characterized in that** it comprises the steps of:
a. insertion of a first insulating plate (11) in a first region (11.a);
b. insertion of a second insulating plate (12) in a second region (12.a);
in which,
- the first insulating plate (11) and the second insulating plate (12) are intermediated by an air insulation means (13); and
- the first insulating plate (11) has the same physical features as the second insulating plate (12).
